# EUROPEAN PATENT APPLICATION

(11) **EP 4 653 905 A1**
(43) Date of publication of application: **26.11.2025**
(21) Application number: 24177407.4
(22) Date of filing: 22.05.2024
(51) Int. Cl.: G01S 3/04, G01S 3/18, G01S 3/48, G01S 3/30

(54) **SYSTEM AND METHOD FOR HYBRID DIRECTION FINDING OF A RADIO FREQUENCY SIGNAL**

(71) Applicant: Rohde & Schwarz GmbH & Co. KG, 81671 München (DE)
(72) Inventor: Reinhardt, Alwin, 81671 München (DE); Kurk, Jaron, 81671 München (DE); Schellens, Philipp, 81671 München (DE); Fischbach, Benjamin, 81671 München (DE)
(74) Representative: Prinz & Partner mbB

(57) **Abstract**

The invention relates to a system (10) for hybrid direction finding of a radio frequency signal. The system (10) comprises at least two antenna modules (12) that each comprise at least two antenna elements (16) which are configured to perform a phase-based direction finding. The at least two antenna modules (12) are located at two different locations (A-D). The at least two antenna modules (12) are configured to perform an amplitude-based direction finding. The system (10) is configured to perform a phase-based direction finding and an amplitude-based direction finding.

## Description

The invention relates to a system for hybrid direction finding of a radio frequency signal, abbreviated by RF signal. Further, the invention relates to a method of performing hybrid direction finding of a radio frequency signal.

In the state of the art, direction finding system, namely systems for direction finding, are known which are based on passive direction finding techniques like amplitude-based direction finding technique or phase-based direction finding technique.

In general, a direction finding system has to fulfill different requirements, namely accuracy, coverage and flexibility. The accuracy and coverage relate to the overall performance of the system, whereas the flexibility ensures that the system can be installed on different bases in a desired manner. Typically, these requirements however contradict each other, particularly the desired accuracy and the desired flexibility. Therefore, a tradeoff has to be found for the specific application scenario with regard to accuracy and flexibility.

It is an object to overcome the disadvantageous of the state of the art while providing a system and a method with improved accuracy, improved coverage and flexibility simultaneously.

The following summary of the present disclosure is intended to introduce different concepts in a simplified form that are described in further detail in the detailed description provided below. This summary is not intended to denote essential features.

The invention provides a system for hybrid direction finding of a radio frequency signal. The system comprises at least two antenna modules that each comprise at least two antenna elements. The at least two antenna elements are configured to perform a phase-based direction finding of a radio frequency signal. Hence, each single antenna module is configured to perform the phase-based direction finding of the radio frequency signal. The at least two antenna modules are located at two different locations. The at least two antenna modules are configured to perform an amplitude-based direction finding of a radio frequency signal, particularly the same radio frequency signal. Hence, the at least two antenna modules together are enabled to perform the amplitude-based direction finding since they are located at different locations. The system is configured to perform a phase-based direction finding and an amplitude-based direction finding. Accordingly, the system is enabled to perform the hybrid direction finding of a radio frequency signal.

Further, the invention provides a method of performing hybrid direction finding of a radio frequency signal. At least two antenna modules located at two different locations perform an amplitude-based direction finding of a radio frequency signal. Each antenna module comprises at least two antenna elements. The amplitude-based direction finding is done by the at least two antenna modules together. In addition, a phase-based direction finding of a radio frequency signal, particularly the same radio frequency signal, is performed by means of the antenna elements of one of the at least two antenna modules. Actually, each antenna module is enabled to perform the phase-based direction finding. Consequently, a hybrid direction finding of a radio frequency signal is done.

The main idea is to combine the two different techniques are used, namely the phase-based direction finding technique and the amplitude-based direction finding technique, thereby combining the advantages of the different techniques. Moreover, the disadvantages of the respective techniques are compensated, particularly by the other technique. The amplitude-based direction finding, also called amplitude technique, compares the amplitudes of radio frequency signals received by the respective antennas, namely the antenna modules. Based on that comparison, the direction of arrival, DOA, of the radio frequency signal can be evaluated accordingly. The phase-based direction finding, also called phase technique, compares the phases of radio frequency signals received by the respective antennas, namely the antenna elements of one antenna module. Based on that comparison, the direction of arrival, DOA, of the radio frequency signal can be evaluated accordingly. The direction of arrival, DOA, may relate to the angle of arrival, AOA. Actually, this depends on the underlying coordinate system, namely Cartesian coordinates for the direction of arrival, DOA, or spherical coordinates for the angle of arrival, AOA. Generally, the phase-based direction finding and the amplitude-based direction finding both are passive direction finding.

In fact, the amplitude-based direction finding technique provides flexibility with regard to the locations of the antennas used for amplitude-based direction finding, namely the antenna modules. Consequently, it is not necessary to provide a dedicated location for the antennas used for amplitude-based direction finding. This flexibility is ensured by the system, as the antenna modules can be located in a flexible manner. In addition, the phase-based direction finding technique is highly accurate, e.g. less than 2° error.

Accordingly, the typically lower accuracy of the amplitude-based direction finding technique, namely 5° to 9° error, compared to the phase-based direction finding technique is compensated by the phase-based direction finding technique as described above. In addition, the relatively low flexibility of the phase-based direction finding technique is compensated by the amplitude-based direction finding technique used by the system and method while using the antenna modules located at two different locations, e.g. being spaced from each other, particularly spaced from each other more than antennas, e.g. antenna elements, used for phase-based direction finding.

Therefore, the system and method for hybrid direction finding of a radio frequency signal provide flexibility and accuracy simultaneously, particularly a higher flexibility compared to a sole phase-based direction finding technique and a higher accuracy compared to a sole amplitude-based direction finding technique.

Since the system comprises at least two antenna modules which each have at least two antenna elements. The entire system has at least four antenna elements. The at least four antenna elements are located at two different locations, namely the locations of the antenna modules.

The two antenna elements per antenna module ensure to determine the azimuth information in an accurate manner. Generally, it would also be possible to determine the azimuth information by means of one antenna element per antenna module while processing the signal received accordingly, but with low accuracy.

The system may be provided on a flying platform, e.g. an airplane, an unmanned aerial vehicle, UAV, like a drone, or on a sea-based platform, e.g. a ship for naval application, or on a land-based platform, e.g. a vehicle like a truck. Hence, the method may relate to a naval method or rather a land-based method.

An aspect provides that the system is configured to use phase information of the antenna elements of one antenna module for the phase-based direction finding. The phase information of the antenna elements of one antenna module can also be used for amplitude-based direction finding. In fact, the information gathered by the antenna elements of one antenna module may be used for a combined amplitude- and phase-based direction finding. In other words, the antenna elements of one antenna module can be used for both phase-based direction finding and amplitude-based direction finding.

Another aspect provides that the system is configured to use amplitude information of antenna elements of different antenna modules for the amplitude-based direction finding. Actually, the antenna elements of different antenna modules are only used for amplitude-based direction finding. Since the antenna modules are located at different locations, e.g. spaced apart from each other, the antenna elements of different antenna modules cannot be used for (accurate) phase-based direction finding. In other words, the antenna elements of different antenna modules can only be used for amplitude-based direction finding rather than (accurate) phase-based direction finding.

According to a further aspect, the system is configured to perform the phase-based direction finding and the amplitude-based direction finding simultaneously. In other words, the amplitude-based direction finding and the phase-based direction finding are performed simultaneously. Actually, this may relate to a first operation mode of the system. The simultaneous phase- and amplitude-based direction finding provides accurate results.

A further aspect provides that the system is configured to perform the phase-based direction finding and the amplitude-based direction finding subsequently. In other words, the amplitude-based direction finding and the phase-based direction finding are performed subsequently. Particularly, the phase-based direction finding follows the amplitude-based direction finding. Actually, this may relate to a second operation mode of the system. The subsequent amplitude-based direction finding and phase-based direction finding may be used in case of insufficient computational power of the system for processing the information simultaneously. For instance, a rough direction finding may be performed by the amplitude-based direction finding since the amplitude-based direction finding is less accurate compared to the phase-based direction finding. Afterwards, the phase-based direction finding may be performed which provide more accurate results compared to the amplitude-based direction finding performed initially. Actually, the phase-based direction finding may be done on the same measurements used for the amplitude-based direction finding, but as a second computational step after the first computational step associated with the amplitude-based direction finding.

In other words, no subsequent measurements are made necessarily, but it could be done.

Typically, the phase and possibly amplitude information of the measurements already performed in the first step where only the amplitude information was used (for the amplitude-based direction finding) are used in the second step again (for the phase-based direction finding).

Each antenna module may cover a dedicated sector. The antenna elements of the respective antenna module are configured to perform the phase-based direction finding for the dedicated sector. The antenna modules each cover dedicated sectors, wherein the sectors may be adjacent to each other. The sectors may overlap partly. Alternatively, the sectors may be adjacent to each other, but not overlapping. In case of a two-step approach, the amplitude-based direction finding performed initially may be done in order to determine the sector to be monitored. Afterwards, the antenna module associated with the sector is used for performing the phase-based direction finding of the respective sector.

Particularly, the antenna modules are configured and arranged such that the system covers 360° in the azimuth plane. Hence, each antenna module may cover 180° in the azimuth plane if two antenna modules are provided. In case of four antenna modules, each antenna module may cover 90° in the azimuth plane.

For instance, each antenna module comprises at least three antenna elements. Three antenna elements per antenna module ensure that azimuth information and elevation information may be provided by the antenna module, particularly when performing the phase-based direction finding.

Another aspect provides that the antenna elements of the same antenna module have parallel boresights. The boresights might be exactly parallel such that the antenna elements of the same antenna module are orientated in the same direction, thereby simplifying the phase-based direction finding. Alternatively, the boresights might deviate from an exact parallelism by up to 15°, e.g. up to 10° or up to 5°, thereby increasing the coverage of the antenna module. This deviation from the exact parallelism also relates to a parallelism.

According to a further aspect, the antenna elements are distanced by less than or equal to the wavelength of the radio frequency signal. In case of radio frequency signals with a frequency of 500 MHz, the distance of the antenna elements among each other in the antenna module may be less than or equal to 50 cm. In case of radio frequency signals with a frequency of 18 GHz, the distance of the antenna elements among each other in the antenna module may be less than or equal to 1 cm to 2 cm.

Generally, the higher the frequency of the radio frequency signal, the smaller the wavelength and, therefore, the smaller the distance of the antenna elements of one antenna module.

According to another aspect, the two different locations are distanced by more than the wavelength of the radio frequency signal, particularly by at least one meter, preferably by at least two meters. Consequently, the antenna modules can be located in a flexible manner as no restrictions with regard to their respective locations is provided.

An accuracy may be increased by using additional antenna elements during the phase-based direction finding and/or by using additional antenna modules during the amplitude-based direction finding. In fact, the system may comprise more than two antenna modules and/or more than two antenna elements per antenna module. The respective antenna elements and/or antenna modules may be controlled, e.g. switched on or off, thereby setting the number of antenna elements and/or antenna modules used for the phase-based direction finding and/or the amplitude-based direction finding. By increasing the number of antenna elements and/or antenna modules, the accuracy of the direction finding is increased.

Moreover, the system can be scaled for adapting the accuracy.

The system may also comprise more than two antenna modules, e.g. three antenna modules or four antenna modules. The antenna modules are located at different locations. Alternatively or additionally, each antenna module may comprise more than two antenna elements, for instance three antenna elements or even more than three antenna elements.

Generally, the number of antenna elements per antenna module is a tradeoff between accuracy and package size since more antenna elements result in a higher accuracy, but larger package size that is disadvantageous.

Particularly, the antenna module has a three-dimensional orientation. The antenna elements are orientated within the antenna module in order to ensure the three-dimensional orientation of the antenna module. Antenna elements may be located in pairs or three-packs wherein these antenna elements of the pairs or three-packs have parallel boresights.

In general, the system has M antenna modules and each antenna module has N antenna elements such that the entire system has M x N antenna elements.

Generally, the amplitudes measured by all four antenna elements, namely the ones of the at least two antenna modules, are used in one computation, whereas the phases of all four antenna elements, namely the ones of the at least two antenna modules, are used pairwise, e.g. in a module-wise manner, in another computation. Accordingly, a two-step approach may be performed since the amplitude measurement is done in a first step followed by the phase measurements in a second step.

Alternatively, all of these measurements can be used in a single step/computation.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a system for hybrid direction finding of a radio frequency signal according to an embodiment of the invention,
- Figure 2 schematically shows one antenna module with three antenna elements, wherein the antenna module is used by the system shown in Figure 1, and
- Figure 3 shows a flow-chart illustrating a method of performing hybrid direction finding of a radio frequency signal.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

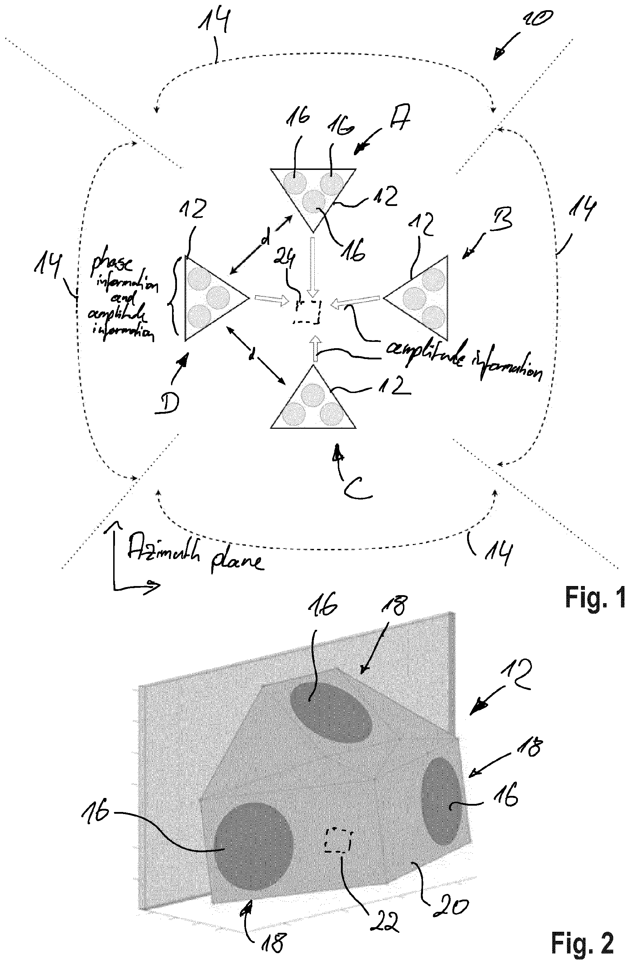

In Figure 1, a system 10 for hybrid direction finding of a radio frequency signal is shown.

The system 10 shown in the illustrated embodiment comprises four antenna modules 12 that are spaced from each other by a distance d of several meters, e.g. by two to 50 meters. Hence, the antenna modules 12 are located at different locations A - D.

The four antenna modules 12 each cover a sector 14 associated with 90° in the azimuth plane that corresponds to the image plane of Figure 1. Hence, the antenna modules 12 are configured and arranged such that the entire system 10 covers 360° in the azimuth plane as shown in Figure 1.

Each antenna module 12 comprises three antenna elements 16. Consequently, the system 10 has M=4 antenna modules 12, wherein each antenna module 12 has N=3 antenna elements 16 such that the entire system 10 has twelve, M=4 x N=3, antenna elements 16 that are located at four different locations.

In Figure 2, a single antenna module 12 is shown in more detail. As shown from Figure 2, the antenna elements 16 are orientated towards a similar direction. Hence, the boresights of the antenna elements 16 are parallel to each other, wherein they may deviate from an exact parallelism by a few degree, for instance up to 15°.

Actually, the deviation from the exact parallelism, namely the boresights of the antenna elements 16 to be exactly parallel to each other, ensures that the antenna module 12 covers a larger sector, e.g. a sector up to 90° as shown in Figure 1.

Moreover, the antenna module 12 may comprise three sets 18 of antenna elements 16, wherein each set 18 of antenna elements 16 comprise at least two antenna elements 16, for instance at least three antenna elements 16. The sets 18 may deviate from each other with regard to the parallelism, but the boresights of the antenna elements 16 of each set 18 may be exactly parallel with each other.

Generally, the antenna elements 16 may be provided in a housing 20, wherein an electronic means 22 is optionally located within the housing 20 that is connected with the antenna elements 16.

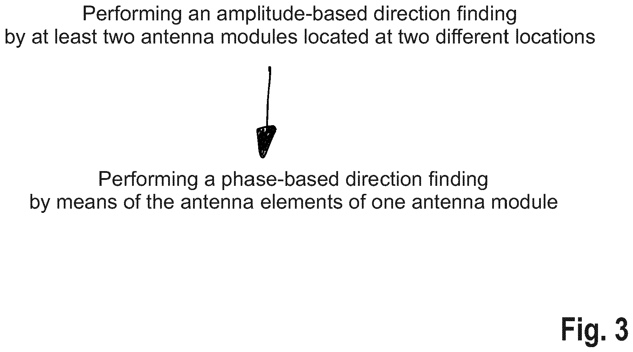

The electronic means 22 may be used for processing radio frequency signals received by the antenna elements 16, as will be described later in more detail, particularly when referring to Figure 3.

Figure 1 further shows that the system 10 comprises besides the antenna modules 12 and the antenna elements 16, a processing circuit 24 that is connected with the antenna modules 12, particularly their respective electronic means 22 if present. Alternatively, the system 10 comprises the processing circuit 24 that is connected with the antenna modules 12, particularly the antenna elements 16, such that it is not necessary for the antenna modules 12 to have their own electronic means 22.

Generally, the system 10 is enabled to perform a phase-based direction finding and an amplitude-based direction finding.

For instance, the antenna modules 12, particularly their antenna elements 16, are used to perform the amplitude-based direction finding. Consequently, the amplitudes of received radio frequency, RF, signals are compared in order to evaluate a direction of arrival, DOA, or an angle of arrival, AOA. The respective RF signals received are forwarded to the processing circuit 24 for being evaluated or pre-processed by the electronic means 22 of the antenna module 12. In any case, the system 10 obtains amplitude information of the antenna elements 16 of different antenna modules 12, thereby enabling the system 10 to perform the amplitude-based direction finding.

Alternatively or additionally, the antenna elements 16 of a single antenna module 12 may be used for the amplitude-based direction finding. Hence, the optional electronic means 22 of the respective antenna module 12 may perform the entire evaluation if desired. In case no electronic means 22 is provided in the antenna module 12, the RF signals received by the antenna elements 16 of the single antenna module 12 may be forwarded to the processing circuit 24 that evaluates the RF signals received for performing the amplitude-based direction finding.

Consequently, each antenna module 12, namely its antenna elements 16, may be used for performing the amplitude-based direction finding. Typically, at least two different antenna modules 12, namely their respective antenna elements 16, are used for performing the amplitude-based direction finding.

Besides the amplitude-based direction finding, the system 10 is generally configured to perform the phase-based direction finding. This is solely done by the antenna elements 16 of a single antenna module 12, e.g. in a sector-wise manner.

Actually, the antenna elements 16 of a single module are distanced by less than or equal to the wavelength of the RF signal, thereby ensuring that accurate phase-based direction finding is possible. In contrast thereto, the antenna modules 12, namely their respective locations A - D, are distanced by more than the wavelength of the RF signal, particularly by at least one meter, preferably by at least two meters, such that only amplitude-based direction finding is possible by means of the antenna elements 16 of the different antenna modules 12.

As shown in Figure 1, each of the antenna modules 12, namely their antenna elements 16, provides phase information and amplitude information for the respective sector 14 covered by the antenna module 12, whereas the antenna modules 12 together provide amplitude information.

Particularly, all antenna elements 16 of all antenna modules 12 together provide the amplitude information.

In other words, a sector-wise direction finding can be performed by the antenna elements 16 of a single antenna module 12 for the dedicated sector A - D, namely a phase-based direction finding and an amplitude-based direction finding.

For obtaining a global overview, namely the entire coverage of the system 10, it is however necessary to involve all antenna modules 12, particularly their antenna elements 16. This global overview however can be done in a precise and accurate manner by using the antenna elements 16 of all antenna modules 12 or by using certain antenna elements 16, e.g. two or three antenna elements 16, of different antenna modules 12 and performing the amplitude-based direction finding.

Generally and as shown in Figure 3, the system 10 may perform the amplitude-based direction finding, namely by at least two antenna modules 12 located at two different locations A - D, wherein each antenna module 12 comprises at least two antenna elements 16. Further, the system 10 may perform the phase-based direction finding by means of the antenna elements 16 of one single antenna module 12.

The phase-based direction finding and the amplitude-based direction finding may be performed simultaneously. This provides best results, but high computational efforts are required for processing the high amount of data/information gathered.

The amount of data/information can be reduced by performing the amplitude-based direction finding while involving two or three antenna elements 16 of different antenna modules 12 and simultaneously using only one antenna module 12 for performing the phase-based direction finding, e.g. two or three antenna elements 16 of a single antenna module 12. Hence, the total number of antenna elements 16 may be reduced to three.

Alternatively, the phase-based direction finding and the amplitude-based direction finding may be performed successively. For instance, the amplitude-based direction finding may be performed initially so as to evaluate the direction of arrival of the RF signal in a rough manner, e.g. with an error up to 10°. Hence, the respective sector 14 of interest can be identified with high accuracy already. In a second step, the antenna module 12 orientated towards the sector 14 of interest is used for performing the phase-based direction finding so as to obtain a more accurate direction finding result, namely with an error up to 2°.

In general, the system 10 may be configured to perform both the simultaneous approach and the subsequent approach. In fact, two operation modes may be provided such that the system 10 can be set to the first operation mode associated with the simultaneous approach or rather the second operation mode associated with the subsequent approach. An operator of the system 10 may select the respective operation mode depending on the application scenario and/or the computational power accessible.

Even though the embodiment shown relates to a system 10 having four antenna modules 12 with three antenna elements 16, it is also possible to have a system 10 with only two antenna modules 12 that each have two antenna elements 16. Such a system 10 is a simplified version, but still feasible to perform the phase-based direction finding and the amplitude-based direction finding.

In case the antenna modules 12 comprise only two antenna elements 16, azimuth information can be obtained. For obtaining additionally the elevation information with high accuracy, it is a preferred that the antenna modules 12 comprise three antenna elements 16 as shown in the preferred embodiments discussed above.

However, it is also possible to obtain elevation information with antenna elements 16 all having boresight at the same elevation. Adding an antenna element 16 having a different elevation boresight already increases the elevation accuracy. Alternatively or additionally, an antenna module 12 may be provided which has only two antenna elements 16 with different elevation boresights, although the azimuth accuracy is decreased compared to the embodiments discussed above.

Generally, the accuracy can be increased by using additional antenna elements 16 during the phase-based direction finding and/or by using additional antenna modules 12 during the amplitude-based direction finding. Hence, the operator of the system 10 may select the number of antenna elements 16 to be involved and/or the number of antenna modules 12 to be involved, particularly due to the application scenario and/or the available computational power. Furthermore, this may also be done automatically, namely based on the application scenario and/or the available computational power. Hence, no manual input is required since the system 10 itself controls the antenna elements 16 and/or antenna modules 12 automatically so as to provide best results in a certain time.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system (10) for hybrid direction finding of a radio frequency signal, wherein the system (10) comprises at least two antenna modules (12) that each comprise at least two antenna elements (16) which are configured to perform a phase-based direction finding, wherein the at least two antenna modules (12) are located at two different locations (A-D), wherein the at least two antenna modules (12) are configured to perform an amplitude-based direction finding, and wherein the system (10) is configured to perform a phase-based direction finding and an amplitude-based direction finding.

2. The system (10) according to claim 1, wherein the system (10) is configured to use phase information of the antenna elements (16) of one antenna module (12) for the phase-based direction finding.

3. The system (10) according to claim 1 or 2, wherein the system (10) is configured to use amplitude information of antenna elements (16) of different antenna modules (12) for the amplitude-based direction finding.

4. The system (10) according to any one of the preceding claims, wherein the system (10) is configured to perform the phase-based direction finding and the amplitude-based direction finding simultaneously.

5. The system (10) according to any one of the preceding claims, wherein the system (10) is configured to perform the phase-based direction finding and the amplitude-based direction finding subsequently.

6. The system (10) according to any one of the preceding claims, wherein each antenna module (12) covers a dedicated sector (14), and wherein the antenna elements (16) of the respective antenna module (12) are configured to perform the phase-based direction finding for the dedicated sector (14).

7. The system (10) according to any one of the preceding claims, wherein the antenna modules (12) are configured and arranged such that the system (10) covers 360° in the azimuth plane.

8. The system (10) according to any one of the preceding claims, wherein each antenna module (12) comprises at least three antenna elements (16).

9. The system (10) according to any one of the preceding claims, wherein the antenna elements (16) of the same antenna module (12) have parallel boresights.

10. The system (10) according to any one of the preceding claims, wherein the antenna elements (16) of a single module (12) are distanced by less than or equal to the wavelength of the radio frequency signal.

11. The system (10) according to any one of the preceding claims, wherein the two different locations (A-D) are distanced by more than the wavelength of the radio frequency signal, particularly by at least one meter, preferably by at least two meters.

12. A method of performing hybrid direction finding of a radio frequency signal, the method comprising the steps of:
- Performing an amplitude-based direction finding by at least two antenna modules (12) located at two different locations (A-D), wherein each antenna module (12) comprises at least two antenna elements (16), and
- Performing a phase-based direction finding by means of the antenna elements (16) of one of the at least two antenna modules (12).

13. The method according to claim 12, wherein the amplitude-based direction finding and the phase-based direction finding are performed simultaneously.

14. The method according to claim 12, wherein the amplitude-based direction finding and the phase-based direction finding are performed subsequently, in particular wherein the amplitude-based direction finding is followed by the phase-based direction finding.

15. The method according to any one of claims 12 to 14, wherein an accuracy is increased by using additional antenna elements (16) during the phase-based direction finding and/or by using additional antenna modules (12) during the amplitude-based direction finding.
